# EUROPEAN PATENT SPECIFICATION

(11) **EP 3 058 262 B1**
(45) Date of publication and mention of the grant of the patent: **11.03.2020**
(21) Application number: 14853213.8
(22) Date of filing: 15.10.2014
(51) Int. Cl.: F16L 57/00, B32B 1/08, F16L 55/17, F16L 58/18, B32B 15/08, B32B 15/085, B32B 27/26, F16B 4/00

(54) **HEAT SHRINKABLE MULTILAYER SLEEVE**
WÄRMESCHRUMPFBARE MEHRSCHICHTIGE HÜLSE
MANCHON MULTICOUCHE THERMORÉTRACTABLE

(30) Priority: 16.10.2013 US 201361891649 P
(43) Date of publication of application: 24.08.2016
(73) Proprietor: ShawCor Ltd., Toronto, Ontario M9W 1M7 (CA)
(72) Inventor: TAILOR, Dilip, Mississauga, Ontario L5R 4B1 (CA); SEEPERSAUD, Ishwarlall, Etobicoke, Ontario M9W 7B7 (CA); ARBOUR, Patrick Marc, Toronto, Ontario M5B 1Y6 (CA); LAFERRIERE, Pascal, Toronto, ON M6P 1B9 (CA)
(74) Representative: Vossius & Partner Patentanwälte Rechtsanwälte mbB
(86) International application number: PCT/CA2014/050994
(87) International publication number: WO 2015/054786

(56) References cited:
- WO-A1-01/87584
- WO-A1-2007/090265
- WO-A1-2012/040475
- WO-A1-2012/098528
- WO-A1-2014/153655
- US-A- 4 356 222
- US-A- 5 208 094
- US-A- 5 300 356
- US-A1- 2012 077 027

## Description

This invention relates to wraps or sleeves for use in oil and gas pipeline applications.

### Background of the Invention

Heat shrinkable sleeves are utilized for covering pipe joints, for example, for oil and gas pipeline applications, or district heating insulated pipelines. Such sleeves are provided in two alternative configurations - tubes, or wraps. Tubes are typically made by welding or joining together the length ends, to produce a tube prior to the application to a pipe. Sheets, in contrast, are applied to a pipe by wrapping the sheet around the pipe, then securing the length ends, typically in an overlapping manner, but with use of a closure patch and/or mechanical fasteners. Both tubes and sheets are typically applied in a pre-stretched form, and heat shrunk to conform to the shape of the pipe joint.

Typically, pipes utilized in pipeline applications are produced in lengths, or sections. These pipe sections, often 20, 40 or 80 feet long, are assembled together by welding operation in the field to produce a much longer pipeline, often several hundred miles in length. Also typically, the steel pipes are coated with protective outer coatings, and sometimes also with insulation coatings. The protective outer coatings protect the pipe's metal from corrosion, oxidation, abrasion, and degradation. The coatings vary significantly in composition, based on the application. For example, a polyolefin (typically polyethylene, polypropylene, or a blend of the two), fusion bonded epoxy (FBE), asphalt enamel, or elastomeric coating may be used to protect a pipe. Coatings may be single layer, or multi layer; often coatings are a multilayer laminate, for example, an FBE layer coating the metal pipe surface, an adhesive tie layer, and a polyethylene or polypropylene outer coating layer.

The pipe sections typically are manufactured with end portions that are left uncoated so that the pipe section can be welded to the end of a pipeline without interference from or damage to the outer surface coating, or having to cut back the coating to expose the steel pipe. When the end portion is welded to the pipeline, this creates a "cut back" region of exposed steel surrounding the girth weld joining the pipe section to the pipeline. As would be appreciated, unlike the coated length of pipe, the cut back region is exposed to the elements. Thus, it is desirable to protect this cut back region by applying a protective sleeve. Typically the sleeve overlaps the outer surface coating on both ends of the cut back region, and is thus either fused or adhesively bonded to both the outer surface coating and to the exposed steel of the cut back region.

Sleeves and their application to a cut back region of an oil and gas pipeline in construction are a multi-million dollar business, and, as can be expected, there are several competing technologies for sleeve design.

Sleeves are typically dual-layer laminates, having an adhesive inner layer and a polyolefin outer layer. On heating, the outer layer, which is typically crosslinked and prestretched, shrinks and conforms to the shape of the cut back region. The inner layer, which melts, adheres the outer heat shrinkable layer to the exposed steel surface of the cutback region, and to the outer surface layer of the pipe coating to either side of the cut back region. Often, the exposed steel surface of the cut back region is coated with a primer such as epoxy before the sleeve is applied.

As can be appreciated, the outside surface of the outer surface layer has a slightly larger diameter than the steel pipe on which it is coated. In addition, the weld bead area protrudes out and is not always smooth. As such, there are many surface irregularities in the surface being coated by the sleeve and there could be a significant stepdown from the outer surface layer to the cut back region. It is desirable to "fill in" all of these irregularities, so that an intimate contact is made for an effective bond, and also so that no air is trapped. The steel on cutback is often grit blasted in order to clean the pipe and also to obtain an anchor pattern depth of 50-200µm in order to increase the available surface area for adhesion. All these irregularities must be filled. This is typically achieved by the adhesive inner layer of the sleeve. The adhesive inner layer has sufficiently low viscosity or sufficiently high melt-index so that it flows, wets out and fills in the irregularities. The crosslinked polyolefin outer layer does not melt and flow on application, and as such, only helps conform to the irregularities upon shrinking and to compress the adhesive layer into the irregularities due to the hoop stress created when it is shrunk.

To a large extent, the filling in of the irregularities, which is highly desirable, is performed by the melted adhesive layer of the sleeve. Thus the adhesive layer must have three key attributes: 1) it must have compatible adhesion properties to bond to the substrate (the outer surface layer, and the cut back region;2)it must have sufficient bulk thickness (volume) to fill in irregularities; and 3)it must have sufficient flow to wet out and fill in the irregularities.

Typically, a common sleeve for pipeline application is a laminate with an approximately 40 mils (1.016 mm) (0.040 inch) cross-linked polyolefin outer layer, and a 60 mils adhesive layer. A common higher thickness sleeve typically has a 60 mils cross-linked polyolefin outer layer, and a 100 mils (2.54 mm) adhesive layer. The sleeve thickness and the corresponding backing and adhesive thickness are dictated by a number of parameters, including:
the mainline coating thickness (with a thicker mainline coating requiring a thicker sleeve); pipe diameter (with a larger diameter pipe requiring a thicker sleeve); soil or environmental conditions (with harsher or more abrasive conditions requiring a thicker sleeve); and industry construction standards.

The thickness ratios (adhesive:backing) typically found in the industry are as follows (Table 1):

**TABLE 1**

| Low Thickness Products | | |
|---|---|---|
| Backing:Adhesive | | |
| Mils | (mm) | (Ratio) |
| 40:20 | (1.016:0.635) | (1:0.5) |
| 40:40 | (1.016:1.016) | (1:1) |
| 40:60 | (1.016:1.524) | (1:1.5) |
| 40:120 | (1.016:3.048) | (1:3) |
| 60:100 | (1.524:2.54) | (1:1.66) |
| 60:120 | (1.524:3.048) | (1:2) |

| High Thickness Products | | |
|---|---|---|
| Backing:Adhesive | | |
| Mils | (mm) | (Ratio) |
| 40:200 | (1.016:5.08) | (1:4) |
| 40:240 | (1.016:6.096) | (1:6) |
| 50:150 | (1.27:3.81) | (1:3) |
| 50:250 | (1.27:6.35) | (1:5) |
| 60:180 | (1.524:4.57) | (1:3) |
| 60:300 | (1.524:7.62) | (1:5) |
| 80:320 | (2.032:8.128) | (1:4) |

Thus the typical current 2-layer sleeves use outer layer backing to adhesive ratios ranging from 1.0:0.5 to 1:5, and sometimes even higher, depending on the size and type of pipeline and construction specifications. For example, the Bluestream pipeline project constructed from Russia to Turkey in 2000 had a pipe diameter of 24", and pipe outer coating thickness of 5.0mm. The shrink sleeve used on the joint was Canusa GTS-PP having a 6.0mm thickness. The design of this comprised a polypropylene backing of 60 mils (1.524 mm)
and an adhesive thickness of 180 mils (4.572 mm)
This is a ratio of 1:3.

Adhesive layers comprise mixtures of elastomers such as EPDM (ethylene propylene diene monomer), butyls, polysiobutenes, copolymers such as EVA (ethylene vinyl acetate), EAA (ethylene acrylic acid), EEA (ethylene ethyl acrylates), or reactively grafted polymers such as maleic anhydride grafted to PE (polyethylene), PP (polypropylene) or EVA. Adhesive layers may also comprise engineering resins such as polyamides and polyurethanes. Typical adhesives utilized in the adhesive layers cost typically 2 - 20 times the cost of the polyolefin outer layer. Typical adhesives used in shrink sleeves are described in the US Patent 4,732, 632 -Column 7, Line and US 4,732412- Column 4, Line 43,and also in US 4,181,775 and 4,359, 556.

The polyolefin outer layer is usually made from lower cost polyethylenes and polypropylenes, generally homopolymers and mixtures with copolymers, elastomers and other additives. The polyethylenes and polypropylenes generally cost in the range of US$0.50 - US$1.00/lb. Copolymers like EVA, EEA typically sell for $1.00 - $1.50/lb while the maleic anhydride grafted polyolefins sell in the range of US$2.00 - US$4.00/lb. Polyamides can cost US$3.00 to US$20.00/lb. Therefore it can be appreciated that the adhesive layer can be a significantly expensive component of a heat shrink sleeve.

US Patent Application Pub. No. US2012/0077027 A1, Marcia Navarro, describes a use of a tying layer interspersed between the heat shrinkable outer layer and the inner adhesive layer. This application also describes a 3 ply heat shrink sleeve design. However, the midlayer in the Navarro invention is intended strictly to act as a compatiblizing medium to bond the inner adhesive layer to the outer heat shrink layer. It is necessary for this midlayer to be reactive so that it can bond to the nonpolar polyolefin outer layer and to bond covalently to the inner adhesive layer. This necessitates the midlayer to be made from a reactively grafted polyolefin, such as maleic anhydride grafted polyethylene, and as such, it is typically quite thin, and relatively expensive.

### Brief Description of the Drawings

Figure 1 is a somewhat schematic cross-section view of a section of pipeline at a cutback region.
Figures 2a and 2b are somewhat schematic cross-section views of a section of pipeline at a cutback region, on which a sleeve has been applied.
Figure 3 is a schematic representation of a tubular sleeve of the present invention.
Figure 4 is a schematic representation of a wrap of the present invention. Figure 4a shows the wrap in a perspective view whereas Figure 4b shows it in cross-section.
Figure 5 is a cross-sectional representation of a wrap of the present invention.
Figure 6 is a cross-sectional representation of a prior art wrap.

### Summary of the Invention

According to one aspect of the invention is disclosed a laminate sleeve for use in covering a pipe joint, comprising: an inner adhesive layer; an outer layer comprising a cross-linked polyolefin; an intermediate layer, between said inner layer and said outer layer, and bonded thereto, comprising a heat sensitive polymeric compound wherein the inner layer is thinner than the intermediate layer.

In certain embodiments, the outer layer is prestretched and heat shrinkable.

In certain embodiments, the outer layer is a cross-linked polyethylene based compound.

In certain embodiments, the outer layer is a cross-linked polypropylene based compound.

In certain embodiments, the heat sensitive polymer compound of the intermediate layer is a ethylene based polymer compound.

In certain embodiments, the heat sensitive polymer compound of the intermediate layer is a propylene based polymer compound.

In certain embodiments, the heat sensitive polymer compound of the intermediate layer melts and flows upon exposure to heat and pressure to facilitate the filling in of the pipe joint irregularities.

In certain embodiments, the heat sensitive polymer compound of the intermediate layer is capable of bonding to the outer and the inner player.

In certain embodiments, the intermediate layer comprises a filler, for example, calcium carbonate, clay, talc, boron sulphate, aluminium oxide, silicon dioxide, ground quartz, glass, slate, bentonite, mica, calcium silicates, inorganic salts, oxides and minerals, or a combination thereof.

In certain embodiments, the inner adhesive layer and the intermediate layer both extend to the entire surface of the outer layer.

In certain embodiments, the intermediate layer is not a tie layer.

In certain embodiments, the inner layer comprises a middle section comprising a first adhesive and surrounding sections comprising a second adhesive.

In certain embodiments, the first adhesive is a metal-bonding adhesive.

In certain embodiments, the second adhesive is a polyolefin-bonding adhesive. In certain embodiments, the second adhesive is an epoxy primer-bonding adhesive.

In certain embodiments, the intermediate layer has a thickness of less than 25 mils (0.635 mm) the ratio of thickness of the intermediate layer to inner layer is between 2.5:1 to 12.5:1, with a maximum inner layer thickness of 10 mils (0.254 mm).

In certain embodiments the intermediate layer has a thickness of 25-40 mils (0.635-1.016 mm) and the ratio of thickness of the intermediate layer to the inner layer is between 1.6:1 to 8:1 with a maximum inner layer thickness of 25 mils (0.635 mm).

In certain embodiments, the intermediate layer has a thickness of 40-90 mils (1.016-2.286 mm) and the ratio of thickness of the intermediate layer to the inner layer is between 2:1 to 6:1 with a maximum inner layer thickness of 45 mils (1.143 mm).

In certain embodiments, the intermediate layer has a thickness of 90-150 mils (2.286-3.81 mm) and the ratio of thickness of the intermediate layer to the inner layer is between 2:1 to 5:1 with a maximum inner layer thickness of 75 mils (1.905mm).

In certain embodiments, the intermediate layer has a thickness of 150-300 mils (3.81-7.62 mm) and the ratio of thickness of the intermediate layer to the inner layer is between 3:1 to 5:1 with a maximum inner layer thickness of 100 mils (2.54 mm).

### Detailed Description

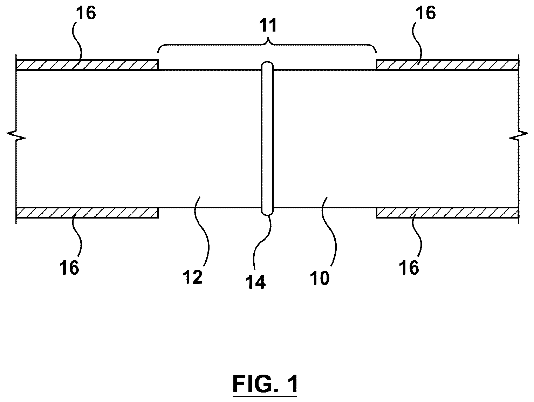

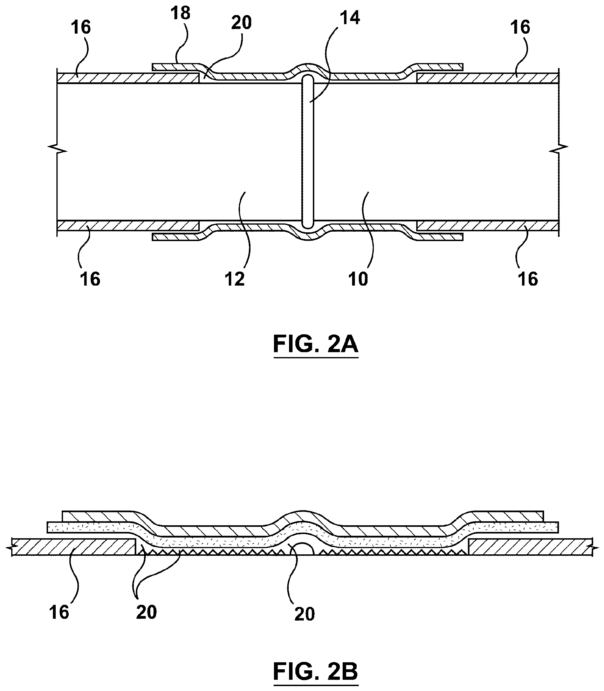

Figure 1 shows a cross-section of a cut back region of a pipe attached to a pipeline. Shown is pipeline 10 attached to pipe 12 at weld bead 14. Both pipeline 10 and pipe 12 are coated with an outer coating 16, which is not present at the cut back region 11. Figure 2a shows this same cross section, with a sleeve applied to the cut back region. Shown is sleeve 18, and air gap 20 between the sleeve 18 and the pipe 12. As would be appreciated, it would be desirable to have no gap 20 after the application of sleeve 18. Figure 2b shows a portion of this same cross section, with a two-ply sleeve applied to the cut back region. Shown are outer and adhesive layers of the sleeve. Also shown is an "anchor pattern" etched into the metal pipe.

As described above, the adhesive layer of the sleeve provides three purposes: bonding to the substrate; providing sufficient bulk thickness to fill in the irregularities; and sufficient flow to wet out and fill in irregularities. Surprisingly, it has been discovered that only a very thin layer of adhesive is required for bonding to the substrate. For example, it was found that, for pipeline with fusion bonded epoxy (FBE) with a coating thickness of 5 - 40 mils (0.127-1.016 mm)
and a relatively low weld bead profile, adhesive thickness of 2-10 mils (0.0508-0.254 mm)
was sufficient to bond to all the surfaces including the FBE coating, the grit blasted anchor pattern with a depth of 75 microns as well as to the weld bead. It was found that pipelines with increasingly higher mainline coating thickness, hence a bigger stepdown transition to the steel as well as higher weld bead height required higher adhesive thickness to obtain a uniform bond. It was discovered that for pipeline joints with certain coating thickness range, there was a surprisingly thin minimum adhesive thickness that was required for fully bonding to the substrate, when there was a sufficient intermediate layer present. This was determined using experimentation and the results are shown below in Table 2:

**TABLE 2**

| Coating thickness | Adhesive thickness |
|---|---|
| 0.2 - 1.00 mm | > 2mils (0.0508 mm), preferably >5 mils (0.127 mm) |
| 1.0 - 3.00 mm | > 5mils (0.127 mm), preferably >10 mils (0.254 mm) |
| 3.0 - 5.00 mm | > 10mils (0.254 mm), preferably >15 mils (0.381 mm) |
| >5.0 | > 15mils (0.381 mm), preferably >20 mils (0.7366 mm) |

| **Weld Bead Height** | **Adhesive thickness** |
|---|---|
| <1.0 mm | > 2mils (0.0508 mm), preferably >5 mils (0.127 mm) |
| 1.0 - 2.00 mm | > 5mils (0.127 mm), preferably >10 mils (0.254 mm) |
| 2.0mm - 3.0mm | > 10mils (0.254 mm), preferably >15 mils (0.381 mm) |
| >3.0 | > 15mils (0.381 mm), preferably >20 mils (0.7366 mm) |

While the adhesive thickness given above was sufficient to create the bond to the substrate, there was another unrealized factor that was affecting the bond quality and uniformity: It was found that when a very thin layer of adhesive was applied to a relatively thicker intermediate layer, the adhesive layer sometimes got intermingled with the mid layer and thus got diffused and lost a full presence on innermost sleeve surface and therefore the coverage over the substrate became spotty and thus the bond to the joint substrate was non-uniform. For example, when a 2 mils (0.0508 mm) of adhesive was applied to an intermediate layer thickness of 100 mils (2.54 mm), a non-uniform and erratic bond was obtained over the joint area, while a 20mils adhesive layer gave a excellent uniform bond to the entire joint surface. It was thus found that, while the thicknesses provided above were sufficient for bonding, the following optimum adhesive thickness provided full surface coverage and bond (Table 3):

**TABLE 3**

| **Intermediate Layer** | | **Optimum Adhesive Thickness** | **Maximum Adhesive** Thickness | | | **Intermediate:Adhesive Range of Ratio** |
|---|---|---|---|---|---|---|
| **mils** | **mm** | **Mils** | **mm** | **mils** | **mm** | |
| < 25 | < 0.635 | 2-10 | 0.0508-0.254 | 10 | 0.254 | 2.5:1 to 12.5:1 |
| 25-40 | 0.635-1.016 | 5-15 | 0.127-0.381 | 25 | 0.635 | 1.6:1 to 8:1 |
| 40-90 | 1.016-2.286 | 15-20 | 0.381-0.508 | 45 | 1.143 | 2:1 to 6:1 |
| 90-150 | 2.286-3.81 | 20-30 | 0.508-0.762 | 75 | 1.905 | 2:1 to 5:1 |
| 150-300 | 3.81-7.62 | 30-60 | 0.762-1.524 | 100 | 2.54 | 3:1 to 5:1 |

The table above provides the desired optimum adhesive thickness required for a sleeve with a given intermediate layer for optimum functioning of the adhesive to give a full surface coverage and bonding. It will be appreciated that while an optimum adhesive thickness range is provided here, in practice, a higher thickness will typically also work. However, for economic reason, one would not want to use much higher thickness than what is necessary. Therefore, for the purpose of this invention, maximum adhesive thickness is also provided for the product to be functional and economic.

For example, a sleeve with an intermediate layer of 60 mils (1.524 mm) functions well with an adhesive thickness of 15 - 20 mils (0.381-0.508 mm), however, it would work just as well with an adhesive thickness of 25 mils (0.635 mm) or 40 mils 1.016 mm). That being said, notwithstanding the cost, sometimes one may choose to use a higher adhesive thickness if the factory processing equipment is not capable of laminating a thin uniform adhesive thickness. In any event, it was determined that there is a maximum adhesive thickness relative to the intermediate layer that is desirable, and beyond which the cost and the efficacy would not warrant use of this design. The table above gives the maximum adhesive thickness for a certain intermediate layer thickness range. For example for an intermediate thickness of 40 mils (1.016 mm), 65 mils (1.651 mm) or 90 mils (2.286 mm), the maximum adhesive thickness would be 45 mils (1.143 mm), and be bound in the ratio range of 2:1 to 6:1.

The above table also provides a ratio of the intermediate:adhesive layer for the range of the respective layers suitable for optimum design. For example, for an intermediate layer thickness of 60 mils (1.524 mm) the ratio to determine the adhesive thickness is 2:1 to 6:1. Therefore the adhesive thickness could be in the range of 30 mils (0.762 mm) (2:1) to 10 mils (0.254 mm) (6:1). The exact thickness then can be determined using the criteria provided for the mainline coating thickness, the weld bead height as well other pertinent requirements and constraints. Obviously one could use adhesive layer greater than 30 mils (0.762 mm) in the example, but the savings would proportionally be lower.

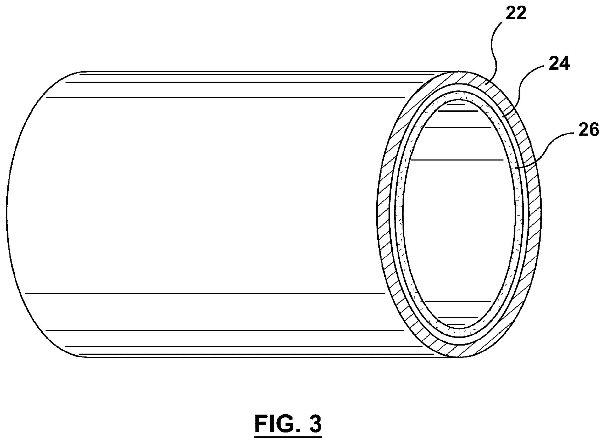

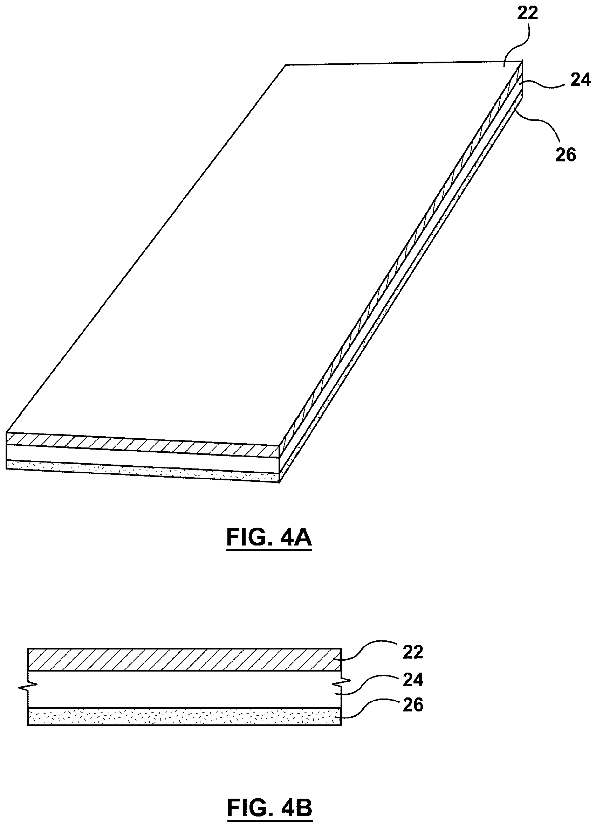

Therefore, provided herein is a three layer laminate sleeve, as shown in Figure 3 (depicting a tube design) and Figures 4a and b (depicting a wrap). In both instances, the three layer laminate comprises inner layer 26, outer layer 22, and intermediate layer 24.

The outer layer 22 is a conventional cross-linked, shrinkable backing layer, similar to that found in prior art sleeves. Typical outer layer, or "backing" technology is described in US patent 6,015,600 for example, at Column 3, Line 36. For a conventional sleeve the outer layer 22 is a cross-linked polyethylene or polypropylene, of 10 - 100 mils (0.254 - 2.54 mm), typically about 20 - 50 mils (0.508-1.27 mm). For a high thickness sleeve or wrap, the outer layer 22 is a cross-linked polyethylene or polypropylene of about 50 - 150 mils (1.27-3.81 mm), typically about 40-80 (1.016-2.032 mm).

The intermediate layer 24, found between the inner adhesive layer 26 and outer backing layer 22, and bonded thereto, is a filler layer of an essentially non-cross-linked polymer which provides sufficient bulk thickness to fill in the irregularities, and sufficient flow to wet out and fill in irregularities, satisfying the 2 of the 3 attributes cited earlier in the description. Thus, the intermediate layer 24 comprises an essentially non-crosslinked polymer, for example, polyethylene or a polyethylene copolymer, with properties possibly inferior to the outer layer in terms of penetration resistance, softening point, impact resistance, tensile strength, stiffness, or flexural modulus. However, it is able to sufficiently melt, flow, and wet out and fill in irregularities, and is of a thickness and bulk sufficient to fill in irregularities. The intermediate layer 24 is of a significantly lower cost than the inner layer (or even the outer backing layer in some cases, which is typically cross-linked). The intermediate layer 24 is hydrophilic, has low water absorption and permeation, and has good shear strength and peel strength - in short, almost all of the desirable properties of the adhesive (inner) layer 26 except the adhesion properties.

The three layers (22,24,26) are bonded together. Therefore, the intermediate layer 24 should be of a composition that is compatible with both the adhesive (inner) layer 26 and the backing (outer) layer 22. Since the chemical composition of the intermediate layer can be quite different from the backing and the adhesive layer, the bond between the layers may not be sufficiently strong. The surface treatment of respective surfaces of the backing and the intermediate layer may be necessary with certain composition combinations, to promote the interfacial bond. The surface treatments such as corona, plasma and flame oxidation were found to be useful to create a bond between the layers.

As can be appreciated, the intermediate layer 24 needs to have sufficient thickness or bulk, must be adhesively compatible to the other two layers, and must be able to melt, flow, and wet out and fill in irregularities at standard application temperatures and conditions. However, it can be made of extremely low cost resins, and can include inexpensive fillers to further reduce costs. For example, the intermediate layer 24 may comprise fillers such as calcium carbonate, clay, talc, boron sulphate, aluminum oxide, silicon dioxide, ground quartz, glass, slate, bentonite, and/or mica, to increase bulk at very low cost.

In a traditional sleeve design, for example, containing a 1:1 ratio of adhesive:backing thickness, a common mode of failure is that the adhesive shear strength deteriorates over time, due to creep and as such, the soil stress resistance of such a sleeve is typically inversely dependent on the thickness of the adhesive. We have found that a sleeve made as described herein (i.e. with a thinner adhesive layer and a thicker intermediate layer) provides improved soil stress resistance, since the intermediate layer can be designed to have higher shear strength than the adhesive layer without compromising the bonding properties. Other benefits are that the intermediate layer, while not quite as strong or impact resistant as the outer layer, can be mechanically stronger (i.e. harder, tougher, higher impact, indentation resistance, higher modulus, and higher shear strength) than the adhesive layer, thus improving the overall mechanical strength of the sleeve. Thus, the intermediate layer behaves like an adhesive (minus adhesion properties) during installation on the pipe joint, flowing and filling in irregularities in the cutback region, but behaves somewhat like the outer backing layer after application and in service, thus enhancing the overall performance of the sleeve, while significantly reducing the cost.

This cost consideration is the crucial goal of the present invention, and as such it is desirable to use a maximum thickness of the midlayer, and low cost materials within the midlayer, which is diametrically opposed to the objective in Navarro (*Supra*), where it is desirable to use the lowest possible thickness for the midlayer, for reasons of cost (since, in Navarro, the cost of the midlayer is relatively high whereas, in the present invention, the cost of the midlayer is relatively low (relative to the cost of the other layers). Additionally if the midlayer in theNavarro design was predominant by way of thickness, it could adversely effect the properties and functions of the sleeve. The Navarro invention describes the mid layer as "tying layer', a commonly used term in the field of art of multilayer films; tying layers, or "tie layers" are used to promote bond between non-compatible polymers. In the text book, Extrusion: Definitive Processing Guide and Handbook, by H.F.Giles, 2005, on page 376, it describes the tie layer "....an appropriate tie layer is employed as an adhesive layer between two resins being bonded together". This is distinguished from the presently claimed invention, where the purpose of the midlayer is to act as "bulk filling material" in the sleeve, essentially to replace the main adhesive, and having key properties of the adhesive except the adhesion properties, which is a very different purpose and, accordingly, composition, to the taught prior midlayer "tie layers", such as those of Navarro.

The Giles Handbook states on page 377,"The second factor is the adhesion based on the tie layer thickness. While thicker resin layers provide better adhesion, what is the application adhesion requirements? If the adhesion requirement is less than maximum strength the tie layer thickness can be reduced..... Economics are always an issue. This comes back to the minimum thickness required to provide adequate adhesion." Thus, in prior art midlayers, the tie layer is designed to be as thin as possible. In contrast, our invention is based on a midlayer that is predominant and ideally much thicker than the inner adhesive layer.

Another surprising benefit was that sleeves having the three-layer design as herein described imparted lower hoop stress than a traditional two ply sleeve. In one configuration, the intermediate layer was designed with slightly higher viscosity or lower melt index then the adhesive. Therefore this intermediate layer offered more resistance to the backing that was shrinking and imparting hoop stress. The practical effect of this resistance is that the shrinking force of the overall sleeve is reduced and the sleeve does not compress or squeeze the intermediate layer to such a high degree, thus minimizing the thickness reduction of the sleeve when shrunk.

The sleeves having the present design provided two benefits: 1)When a sleeve is applied over a girth weld bead, which is typically 3 mm high, there is a sleeve thickness reduction of 15 - 20 mils (0.381-0.508 mm)
on a total sleeve thickness of 80 mils (20.32 mm)
with a conventional sleeve. It was found that the same sleeve made in the presently described 3-ply version lost thickness of only 5 - 10 mils (0.127-0.254 mm) .
This would allow the overall sleeve thickness to be reduced by about 12%, which is a significant saving. 2) The reduced hoop stress is of particular advantageous in a wrap design, since hoop stress sometimes causes the wrap closure patch to fail due to the circumferential shrinking force imparted to the closure patch. This means that closure patch area could be reduced. For example, it was found that a standard 4.5" x 18" wide closure patch could be reduced in size to 3.75" x 18" and still hold the sleeve together during shrinking. This is a cost reduction of 16%.

Due to the improved strength of the intermediate layer (as compared to a typical adhesive layer of similar thickness), the use of the intermediate layer also allows, if desired, the use of a thinner outer layer for similar overall strength properties for the sleeve, thus allowing significant cost savings. Alternatively, a standard thickness outer layer can be utilized, resulting in an overall stronger sleeve.

### Example 1 - Manufacture of a Three Ply Sleeve Conforming to Properties of a Conventional Sleeve

A typical conventional sleeve was made by laminating (bonding) a 60 mils adhesive layer to a 40 mils cross-linked polyethylene outer backing layer. The polythylene sleeve backing was made using Nova LF0219A. This is a low density polyethylene resin having a melt index of 2.3g/10 min. The backing was extruded into a sheet, crosslinked with electron radiation, and stretched 30% with a final thickness of 40 mils (1.016 mm). This was then laminated with 60 mils (1.524 mm) of conventional adhesive.

A sleeve with equivalent or better properties was manufactured, at significantly lower cost, using the invented design as follows:

A polythylene sleeve backing was made using Nova LF0219A having a melt index of 2.3g/10 min, as was done for the conventional sleeve. The backing was extruded into a sheet, crosslinked with electron radiation, and stretched 30% with a final thickness of 40 mils (1.016 mm).

A 40 mils intermediate layer of polyethylene compound was laminated, using an extrusion die, to the 40 mils crosslinked stretched backing layer. The intermediate layer was made from Dow LDPE 4016 blended with Dupont EVA copolymer and 10% mineral filler. The intermediate layer had a melt index of 12g/10 minutes. In order to enhance the bond of the intermediate layer to the backing, the latter was flame treated to oxidise the surface.

A 20 mils adhesive layer was then laminated to the intermediate layer using an adhesive extrusion die. The adhesive layer was based on a blend of OREVAC 18211 and a hydrocarbon resin to obtain a melt index of 22g/10min. Orevac 18211(Arkema Canada Inc) is a polyethylene copolymer reactively grafted with maleic anhydride. It was found necessary to corona treat the surface of the intermediate layer to promote the bond of the adhesive layer.

The laminated sheet was cut into a layflat length of 82" and wrapped on a joint made on a 24" pipe with 3-layer polyethylene coating of 2.0 mm thickness. The joint had weld bead of 3 mm height and a width of 10mm. The pipe was preheated to 120°C with induction heating and the sleeve was wrapped around the pipe and secured with a 3.75" closure patch. The sleeve was shrunk in a normal manner with two propane torches by two operators. It was found that sleeve took about 5% longer time than a conventional sleeve, which takes 4.4 minutes. However, there was no closure patch slippage despite the fact that a patch that was shorter than a standard patch by 0.75".

The conventional sleeve was also applied in a similar manner on a similar 24" pipe joint.

The thickness on the weld bead was measured. The original sleeve thickness was 100 mils. It was found that with the invention sleeve, the remaining sleeve thickness on the weld bead was in the range 87 and 93 mils (2.2098 mm and 2.362 mm)
- On the conventional sleeve, the thickness on the weld bead was found to be between 76 and 86 mils (1.9304 and 2.1844 mm)
- This means that where a construction specification call for a certain minimum thickness, the product thickness could be reduced by about 9 mils, a cost reduction of about 10% in this example.

### Example 2 - Manufacture of a Three Ply Sleeve Conforming to Properties of a High Thickness Sleeve

A typical extra high thickness sleeve is made by laminating a 300 mils (7.62 mm) adhesive layer to a 60 mils (1.524 mm) of cross-linked pre-stretched polypropylene outer layer backing.

A 3-ply sleeve with equivalent or better properties was manufactured, at significantly lower cost, as follows:

A 260 mils (6.604 mm) intermediate layer of polypropylene compound was laminated to a 60 mils cross-linked polypropylene outer layer using extrusion lamination.

A 40 mils (1.016 mm) traditional grafted polypropylene adhesive layer was then laminated (bonded) to the intermediate layer.

The 3-ply sleeve was a modified version of the Canusa GTS-PP sleeve. The conventional (prior art) sleeve was made by taking a crosslinked polypropylene backing made from Profax 7823 (0.45 MI PP) supplied by Lyondell-Bassell and coating it with the traditional adhesive made from polypropylene copolymer grafted with maleic anhydride, grade Orevac 18732 from Arkema. For the 3-ply sleeve that was an embodiment of the present invention, the mid layer was made from a blend that included Moplen RP2380 (48 MI polypropylene from Lyondell-Bassell), blended EPDM rubber and additives.

Sleeve made from the conventional design and the present, new 3-ply sleeves were converted into tubes by beveling the ends and overlapping them and welding the overlap with heat and pressure. The tubes were fitted over 36" pipe joints and shrunk by 4 operators using 4 propane torches. The installation time for the conventional sleeve was 6 min 45 sec, and the 3-ply sleeve was 7 min. It was found that the impact and indentation resistance of the 3-ply sleeve was markedly improved at 100°C. The indentation penetration of the traditional sleeve was 0.36 mm at 100°C, while the 3-ply sleeve was 0.25 mm. More significantly, the 3 ply sleeve was 20% cheaper to manufacture than the traditional sleeve. The improved mechanical properties of the 3-ply sleeve (shown in Table 4, for example) means that the thickness of the product could be reduced and yet meet the property requirements, thus further reducing the cost.

**TABLE 4**

| | Traditional Sleeve | 3-Ply Design |
|---|---|---|
| Impact Resistance (EN 12068) | 25 joules | 31 joules |
| Penetration @ 100°C | 0.36mm | 0.25mm |

### Example 3 - Manufacture of a Three Ply Sleeve Conforming to Properties of a High Thickness Sleeve, With Two Adhesives

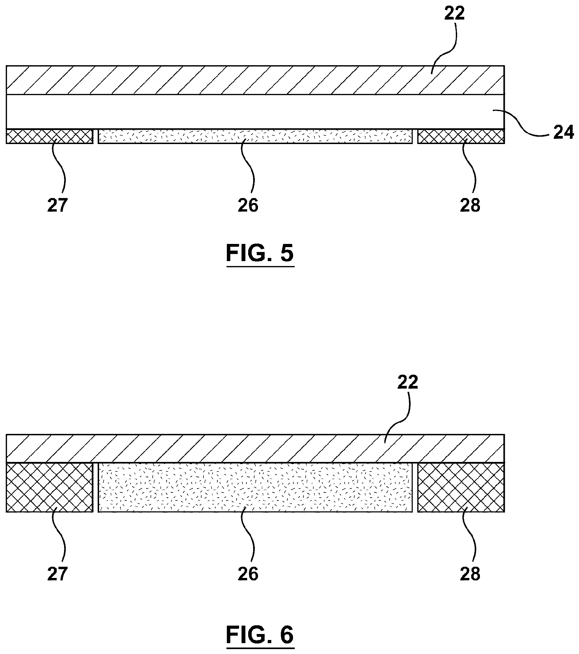

The invention described so far was intended to provide a lower cost heat shrink sleeve; the inner ply of the sleeve was a single adhesive, designed to cover and adhere to both the steel cutback region of the pipe, as well as to the pipe outer surface coating on either side of the cutback region. This design would require the adhesive to have the characteristics to be compatible to have good bond to the outer surface coating as well to the substrate at the cutback, which may be steel or an epoxy primer. This is a demanding functionality required in a single adhesive as it has to bond two diverse substrates, and as such, typically, a relatively expensive adhesive needs to be used. In order to further lower costs, a design was created, shown in figure 5, which uses two different adhesives as the inner layer. The adhesive in the mid-section 26 is designed to bond readily to the steel or epoxy substrate on the cutback region, and the adhesive 27 on the sleeve sides is formulated to bond specifically to the mainline coating, which maybe a polyethylene, polypropylene or an epoxy coating/epoxy primer. Such dual layer adhesive designs have been described in US 4,732,412 (see figure 6)and WO 01/87584 A1, but not in combination with the presently described 3-ply sleeve.

In one example, Canusa GTS-PP type sleeve was applied to a pipe joint coated with 6.0 mm PP coating. This sleeve type requires the steel surface to be preheated to 180°C to activate the PP adhesive. When the pipe cutback was heated using induction heating until the steel at the cutback and under the PP coating reached 180°C, the surface of the PP coating reached only 130°C due the insulation property of the 6 mm thick PP. This required augmented heat on the PP coating and extra post heat on the sleeve to affect the bond to the PP coating. In the new design, the adhesive 27 on the sides was made with slightly lower softening point and extra reactive grade PP copolymer in order to create a bond at the lower temperature. In another variation, the side layer 27 was made from a mastic type pressure sensitive adhesive that readily bonded to the PP coating as described in the WO 01/87584 A1. In the WO 01/87584 A1, separate mastic strips were used, while in the present experiment, mastic adhesive was laminated on the two sides, 4" wide on a 24" wide sleeve, though either could be utilized in combination with the presently disclosed 3-ply sleeve. A further and unexpected benefit of a dual-layer adhesive design when combined with the presently disclosed 3-ply sleeve is that the mechanical properties, such as indentation resistance, impact resistance, shear strength and the soil box test can be derived from the stronger midlayer and maintained in the final product, while a thin layer of dual-adhesives is used to target adhesion to the different substrates. The inner layer of the sleeve is divided into three zones, the mid section is targeted to the cutback and the left and right are targeted to the outer surface of the adjacent coating.

In the prior art, the properties of the sleeve are dictated by the full thickness of the adhesive layers. An experiment was done by applying sleeves as shown in Fig 5 and Fig 6. The Fig 5 shows the current invention, whereby the adhesive 27 in the left and 28 in the right zone were 20 mils thick. The figure 6 shows the prior art design whereby the side zones were 60 mils thick. Same mastic adhesive was used in the zones 27 and 28 both sleeves. These sleeves were applied onto a 6" steel pipe and tested for comparison. The results were as follows(Table 5):

**TABLE 5**

| | Invention-Fig 5 | Prior art-Fig 6 |
|---|---|---|
| Impact Strength (EN12068) | 25 joules | 16 joules |
| Penetration @100°C (DIN 30678) | 0.36 mm | 1.6 mm |
| Soil Box Test (EN 498) | 100 cycle | 12 cycles |

This experiment demonstrated that the design of this invention can be used not only to reduce the cost but also to enhance the utility and the performance of the sleeve as a joint coating by tailoring and targeting the thin adhesive for various substrates on the same joint by zoning the sleeve surface.

## Claims

1. A laminate sleeve for use in covering a pipe joint, comprising:
a. an inner adhesive layer;
b. an outer layer comprising a cross-linked polyolefin;
c. an intermediate layer, between said inner layer and said outer layer, and bonded thereto, comprising a heat sensitive polymeric compound, wherein the inner layer is thinner than the intermediate layer.

2. The laminate sleeve of claim 1 wherein the outer layer is prestretched and heat shrinkable.

3. The laminate sleeve of claim 1 wherein the outer layer is a cross-linked polyethylene based compound.

4. The laminate sleeve of claim 1 wherein the outer layer is a cross-linked polypropylene based compound.

5. The laminate sleeve of claim 1 wherein the heat sensitive polymer compound of the intermediate layer is a ethylene based polymer compound.

6. The laminate sleeve of claim 1 wherein the heat sensitive polymer compound of the intermediate layer is a propylene based polymer compound.

7. The laminate sleeve of claim 1 wherein the heat sensitive polymer compound of the intermediate layer melts and flows upon exposure to heat and pressure to facilitate the filling in of the pipe joint irregularities.

8. The laminate sleeve of claim 1 wherein the heat sensitive polymer compound of the intermediate layer is capable of bonding to the outer and the inner layer.

9. The laminate sleeve of claim 1 wherein the intermediate layer comprises a filler.

10. The laminate sleeve of claim 9 wherein the filler comprises one or more of the following: calcium carbonate, clay, talc, boron sulphate, aluminium oxide, silicon dioxide, ground quartz, glass, slate, bentonite, mica, calcium silicates, inorganic salts, oxides and minerals.

11. The laminate sleeve of any one of claims 1-7 wherein the inner adhesive layer and the intermediate layer both extend to the entire surface of the outer layer.

12. The laminate sleeve of any one of claims 1-11 wherein the intermediate layer is not a tie layer.

13. The laminate sleeve of any one of claims 1-12 wherein the inner layer comprises a middle section comprising a first adhesive and surrounding sections comprising a second adhesive.

14. The laminate sleeve of claim 13 wherein the first adhesive is a metal-bonding adhesive.

15. The laminate sleeve of claim 13 or 14 wherein the second adhesive is a polyolefin-bonding adhesive.

16. The laminate sleeve of claim 13 or 14 wherein the second adhesive is an epoxy-bonding adhesive.

17. The laminate sleeve of claim 1 wherein the intermediate layer has a thickness of less than 25 mils (0.635 mm) and the ratio of thickness of the intermediate layer to inner layer is between 2.5:1 to 12.5:1, with a maximum inner layer thickness of 10 mils (0.254 mm).

18. The laminate sleeve of claim 1 wherein the intermediate layer has a thickness of 25-40 mils (0.635 - 1.016 mm) and the ratio of thickness of the intermediate layer to the inner layer is between 1.6:1 to 8:1 with a maximum inner layer thickness of 25 mils (0.635 mm).

19. The laminate sleeve of claim 1 wherein the intermediate layer has a thickness of 40-90 mils (1.016 - 2.286 mm) and the ratio of thickness of the intermediate layer to the inner layer is between 2:1 to 6:1 with a maximum inner layer thickness of 45 mils (1.143 mm).

20. The laminate sleeve of claim 1 wherein the intermediate layer has a thickness of 90-150 mils (2.286 - 3.81 mm) and the ratio of thickness of the intermediate layer to the inner layer is between 2:1 to 5:1 with a maximum inner layer thickness of 75 mils (1.905 mm).

21. The laminate sleeve of claim 1 wherein the intermediate layer has a thickness of 150-300 mils (3.81 - 7.62 mm) and the ratio of thickness of the intermediate layer to the inner layer is between 3:1 to 5:1 with a maximum inner layer thickness of 100 mils (2.54 mm).

## Patentansprüche

1. Eine laminierte Hülse zur Verwendung bei der Abdeckung einer Rohrverbindung, umfassend:
a. eine innere Klebstoffschicht;
b. eine äußere Schicht, umfassend ein vernetztes Polyolefin;
c. eine Zwischenschicht zwischen der inneren Schicht und der äußeren Schicht, und an diese gebunden,
umfassend eine wärmeempfindliche Polymerverbindung,
wobei die innere Schicht dünner ist als die Zwischenschicht.

2. Die laminierte Hülse nach Anspruch 1, wobei die äußere Schicht vorgedehnt und wärmeschrumpfbar ist.

3. Die laminierte Hülse nach Anspruch 1, wobei die äußere Schicht eine Verbindung auf der Basis von vernetztem Polyethylen ist.

4. Die laminierte Hülse nach Anspruch 1, wobei die äußere Schicht eine Verbindung auf der Basis von vernetztem Polypropylen ist.

5. Die laminierte Hülse nach Anspruch 1, wobei die wärmeempfindliche Polymerverbindung der Zwischenschicht eine Polymerverbindung auf der Basis von Ethylen ist.

6. Die laminierte Hülse nach Anspruch 1, wobei die wärmeempfindliche Polymerverbindung der Zwischenschicht eine Polymerverbindung auf der Basis von Propylen ist.

7. Die laminierte Hülse nach Anspruch 1, wobei die wärmeempfindliche Polymerverbindung der Zwischenschicht unter Einwirkung von Hitze und Druck schmilzt und fließt, um das Ausfüllen von Unregelmäßigkeiten der Rohrverbindung zu erleichtern.

8. Die laminierte Hülse nach Anspruch 1, wobei die wärmeempfindliche Polymerverbindung der Zwischenschicht zur Bindung mit der äußeren und der inneren Schicht fähig ist.

9. Die laminierte Hülse nach Anspruch 1, wobei die Zwischenschicht einen Füllstoff umfasst.

10. Die laminierte Hülse nach Anspruch 9, wobei der Füllstoff eines oder mehrere der Folgenden umfasst: Calciumcarbonat, Ton, Talk, Borsulfat, Aluminiumoxid, Siliciumdioxid, gemahlenes Quarz, Glas, Schiefer, Bentonit, Glimmer, Calciumsilicate, anorganische Salze, Oxide und Minerale.

11. Die laminierte Hülse nach einem der Ansprüche 1-7, wobei sich die innere Klebstoffschicht und die Zwischenschicht beide über die gesamte Oberfläche der äußeren Schicht erstrecken.

12. Die laminierte Hülse nach einem der Ansprüche 1-11, wobei die Zwischenschicht keine Bindeschicht ist.

13. Die laminierte Hülse nach einem der Ansprüche 1-12, wobei die innere Schicht einen mittleren Abschnitt, der einen ersten Klebstoff umfasst, und umgebende Abschnitte, die einen zweiten Klebstoff umfassen, umfasst.

14. Die laminierte Hülse nach Anspruch 13, wobei der erste Klebstoff ein metallbindender Klebstoff ist.

15. Die laminierte Hülse nach Anspruch 13 oder 14, wobei der zweite Klebstoff ein polyolefinbindender Klebstoff ist.

16. Die laminierte Hülse nach Anspruch 13 oder 14, wobei der zweite Klebstoff ein epoxybindender Klebstoff ist.

17. Die laminierte Hülse nach Anspruch 1, wobei die Zwischenschicht eine Dicke von weniger als 25 mils (0,635 mm) aufweist und das Verhältnis der Dicke der Zwischenschicht zur inneren Schicht 2,5:1 bis 12,5:1 beträgt, mit einer maximalen Dicke der inneren Schicht von 10 mils (0,254 mm).

18. Die laminierte Hülse nach Anspruch 1, wobei die Zwischenschicht eine Dicke von 25-40 mils (0,635 - 1,016 mm) aufweist und das Verhältnis der Dicke der Zwischenschicht zur inneren Schicht 1,6:1 bis 8:1 beträgt, mit einer maximalen Dicke der inneren Schicht von 25 mils (0,635 mm).

19. Die laminierte Hülse nach Anspruch 1, wobei die Zwischenschicht eine Dicke von 40-90 mils (1,016 - 2,286 mm) aufweist und das Verhältnis der Dicke der Zwischenschicht zur inneren Schicht 2:1 bis 6:1 beträgt, mit einer maximalen Dicke der inneren Schicht von 45 mils (1,143 mm).

20. Die laminierte Hülse nach Anspruch 1, wobei die Zwischenschicht eine Dicke von 90-150 mils (2,286 - 3,81 mm) aufweist und das Verhältnis der Dicke der Zwischenschicht zur inneren Schicht 2:1 bis 5:1 beträgt, mit einer maximalen Dicke der inneren Schicht von 75 mils (1,905 mm).

21. Die laminierte Hülse nach Anspruch 1, wobei die Zwischenschicht eine Dicke von 150-300 mils (3,81 - 7,62 mm) aufweist und das Verhältnis der Dicke der Zwischenschicht zur inneren Schicht 3:1 bis 5:1 beträgt, mit einer maximalen Dicke der inneren Schicht von 100 mils (2,54 mm).

## Revendications

1. Manchon stratifié pour une utilisation dans le recouvrement d'un raccord de tuyau, comprenant :
a. une couche adhésive intérieure ;
b. une couche extérieure comprenant une polyoléfine réticulée ;
c. une couche intermédiaire, entre ladite couche intérieure et ladite couche extérieure, et collée à celles-ci, comprenant un composé polymère thermosensible,
dans lequel la couche intérieure est plus fine que la couche intermédiaire.

2. Manchon stratifié selon la revendication 1, dans lequel la couche extérieure est pré-étirée et thermorétractable.

3. Manchon stratifié selon la revendication 1, dans lequel la couche extérieure est un composé à base de polyéthylène réticulé.

4. Manchon stratifié selon la revendication 1, dans lequel la couche extérieure est un composé à base de polypropylène réticulé.

5. Manchon stratifié selon la revendication 1, dans lequel le composé polymère thermosensible de la couche intermédiaire est un composé polymère à base d'éthylène.

6. Manchon stratifié selon la revendication 1, dans lequel le composé polymère thermosensible de la couche intermédiaire est un composé polymère à base de propylène.

7. Manchon stratifié selon la revendication 1, dans lequel le composé polymère thermosensible de la couche intermédiaire fond et coule suite à une exposition à de la chaleur et à une pression pour faciliter le remplissage des irrégularités du raccord de tuyau.

8. Manchon stratifié selon la revendication 1, dans lequel le composé polymère thermosensible de la couche intermédiaire est capable de se coller aux couches extérieure et intérieure.

9. Manchon stratifié selon la revendication 1, dans lequel la couche intermédiaire comprend une charge.

10. Manchon stratifié selon la revendication 9, dans lequel la charge comprend un ou plusieurs des suivants : carbonate de calcium, argile, talc, sulfate de bore, oxyde d'aluminium, dioxyde de silicium, quartz broyé, verre, ardoise, bentonite, mica, silicates de calcium, sels inorganiques, oxydes et minéraux.

11. Manchon stratifié selon l'une quelconque des revendications 1 à 7, dans lequel la couche adhésive intérieure et la couche intermédiaire s'étendent toutes deux sur toute la surface de la couche extérieure.

12. Manchon stratifié selon l'une quelconque des revendications 1 à 11, dans lequel la couche intermédiaire n'est pas une couche de liaison.

13. Manchon stratifié selon l'une quelconque des revendications 1 à 12, dans lequel la couche intérieure comprend une section médiane comprenant un premier adhésif et entourant des sections comprenant un deuxième adhésif.

14. Manchon stratifié selon la revendication 13, dans lequel le premier adhésif est un adhésif collant le métal.

15. Manchon stratifié selon la revendication 13 ou 14, dans lequel le deuxième adhésif est un adhésif collant une polyoléfine.

16. Manchon stratifié selon la revendication 13 ou 14, dans lequel le deuxième adhésif est un adhésif collant un époxy.

17. Manchon stratifié selon la revendication 1, dans lequel la couche intermédiaire a une épaisseur inférieure à 25 mils (0,635 mm) et le rapport de l'épaisseur de la couche intermédiaire à la couche intérieure est compris entre 2,5/1 et 12,5/1, avec une épaisseur de couche intérieure maximale de 10 mils (0,254 mm).

18. Manchon stratifié selon la revendication 1, dans lequel la couche intermédiaire a une épaisseur de 25 à 40 mils (0,635 à 1,016 mm) et le rapport de l'épaisseur de la couche intermédiaire à la couche intérieure est compris entre 1,6/1 et 8/1, avec une épaisseur de couche intérieure maximale de 25 mils (0,635 mm).

19. Manchon stratifié selon la revendication 1, dans lequel la couche intermédiaire a une épaisseur de 40 à 90 mils (1,016 à 2,286 mm) et le rapport de l'épaisseur de la couche intermédiaire à la couche intérieure est compris entre 2/1 et 6/1, avec une épaisseur de couche intérieure maximale de 45 mils (1,143 mm).

20. Manchon stratifié selon la revendication 1, dans lequel la couche intermédiaire a une épaisseur de 90 à 150 mils (2,286 à 3,81 mm) et le rapport de l'épaisseur de la couche intermédiaire à la couche intérieure est compris entre 2/1 et 5/1, avec une épaisseur de couche intérieure maximale de 75 mils (1,905 mm).

21. Manchon stratifié selon la revendication 1, dans lequel la couche intermédiaire a une épaisseur de 150 à 300 mils (3,81 à 7,62 mm) et le rapport de l'épaisseur de la couche intermédiaire à la couche intérieure est compris entre 3/1 et 5/1, avec une épaisseur de couche intérieure maximale de 100 mils (2,54 mm).
